# FASCICULE DE BREVET EUROPEEN

(11) **EP 2 612 049 B1**
(45) Date de publication et mention de la délivrance du brevet: **25.03.2015**
(21) Numéro de dépôt: 11755403.0
(22) Date de dépôt: 09.08.2011
(51) Int. Cl.: F16D 3/04

(54) **DISPOSITIF DE TRANSMISSION DE COUPLE**
DREHMOMENTÜBERTRAGUNGSVORRICHTUNG
TORQUE TRANSMISSION DEVICE

(30) Priorité: 03.09.2010 FR 1057008
(43) Date de publication de la demande: 10.07.2013
(73) Titulaire: Valeo Embrayages, 80009 Amiens Cedex 2 (FR)
(72) Inventeur: MAUREL, Hervé, F-80000 Amiens (FR); DELEVALLEE, Jean-Louis, F-25620 Mamirolle (FR)
(74) Mandataire: Tran, Chi-Hai
(86) Numéro de dépôt international: PCT/FR2011/051889
(87) Numéro de publication internationale: WO 2012/028799

(56) Documents cités:
- EP-A1- 0 940 594
- DE-B- 1 154 680
- FR-A1- 2 926 866
- US-A- 1 883 611

## Description

L'invention concerne un dispositif de transmission de couple, destiné à équiper un dispositif de commande d'un embrayage, en particulier pour véhicule automobile.

Le document FR 2 926 866, au nom de la Demanderesse, décrit un dispositif de commande d'un embrayage ou actionneur d'embrayage comportant un moteur électrique dont l'arbre de sortie est couplé à un organe mobile de l'embrayage par l'intermédiaire d'un réducteur de vitesse planétaire et d'un dispositif de transmission de couple du type joint de Oldham.

Ce dernier permet la transmission d'un mouvement de rotation entre deux axes parallèles, respectivement l'arbre de sortie du réducteur, dont la position peut varier en fonctionnement, et l'arbre relié à l'organe mobile de l'embrayage, dont la position reste fixe en fonctionnement.

Le joint de Oldham est destiné à transmettre un couple entre un organe menant et un organe mené au moyen d'un élément intermédiaire comportant au moins deux rainures (ou des ergots) sensiblement perpendiculaires, coopérant avec des ergots (ou des rainures, respectivement) de l'organe menant et de l'organe mené.

Ce dispositif de transmission permet, de façon compacte, de compenser le désalignement entre les arbres en ayant des vitesses de rotation identiques en entrée et en sortie. Des frottements sont toutefois générés lors de son fonctionnement, par friction des ergots dans les rainures, ce qui affecte le rendement de ce type de transmission.

Dans le cas particulier d'un double embrayage par exemple, deux actionneurs d'embrayage sont utilisés, chaque actionneur commandant un embrayage. Hormis les phases de transition, le fonctionnement du double embrayage nécessite que les deux embrayages ne soient jamais embrayés de façon simultanée.

Afin de garantir qu'un tel incident ne se produise pas en cas de panne d'alimentation électrique, il est important que les embrayages, et donc les actionneurs, retrouvent leur position débrayée ou position dite ouverte lorsque les moteurs électriques des actionneurs ne sont plus alimentés.

Afin de garantir que le retour à cette position de sécurité soit rapide et complet, il est nécessaire d'améliorer le rendement du joint de Oldham, en particulier dans le sens de rotation servant à atteindre cette position.

Le document GB 758 383 propose un joint de Oldham dont l'élément intermédiaire comporte deux rainures perpendiculaires, chaque rainure présentant deux faces opposées servant au guidage des ergots des organes menant et mené. Chaque face des rainures est équipée d'un rouleau contre lequel l'ergot correspondant prend appui. Les frottements générés par le joint de Oldham en fonctionnement sont donc réduits, et le rendement est amélioré.

L'utilisation de nombreux rouleaux est coûteuse, et augmente la complexité du joint de Oldham.

Dans le cas particulier d'un actionneur d'embrayage, les ergots des organes menés et menant ne sont en contact qu'avec une seule des faces opposées de guidage des rainures, en fonctionnement normal.

En effet, un embrayage est généralement équipé de moyens permettant de rappeler élastiquement l'embrayage vers sa position dite « normale ». Dans le cas d'un embrayage du type normalement fermé, le plateau de pression est rappelé élastiquement vers une position de serrage contre le plateau de réaction de manière que le système d'embrayage soit dans un état embrayé. Dans le cas d'un embrayage de type normalement ouvert, le plateau est rappelé élastiquement vers une position écartée du plateau de pression de réaction de manière que le système d'embrayage soit dans un état débrayé. Dès lors, ces moyens de rappel exercent un couple de rappel sur l'arbre mené de telle sorte que le sens du couple entre l'organe mené et l'organe menant est identique quelle que soit la direction de rotation de l'organe menant de l'actionneur. Les ergots des organes menant et menés viennent donc en contact avec les mêmes surfaces de guidage quelle que soit la direction de rotation de l'organe menant.

Dès lors, le joint Oldham décrit dans le document GB 758 383 est relativement complexe pour un dispositif de transmission d'un dispositif de commande d'embrayage.

Le document JP 2000-242075 divulgue un joint de Oldham dont l'élément intermédiaire est équipé d'ergots perpendiculaires guidés dans des rainures des organes mené et menant. Une seule face de chaque ergot est équipée d'un rouleau, ce qui permet de limiter les frottements dans un seul sens du couple transmis.

Le document US 1883611 divulgue également un joint de Oldham équipé d'ergots. Tout comme le joint de Oldham décrit dans le document JP 2000-242075, une seule face de chaque ergot du joint de Oldham décrit dans le document US 1883611 est également équipée d'un rouleau.

Le montage des rouleaux décrits dans le document JP 2000-242075 et dans le document US 1883611 est toutefois fastidieux et leur maintien en position par rapport aux ergots n'est pas assuré correctement.

L'invention a notamment pour but d'apporter une solution simple, efficace et économique à ces problèmes.

A cet effet, elle propose un dispositif de transmission de couple, entre un organe menant et un organe mené, comprenant un élément intermédiaire destiné à être entraîné en rotation par l'organe menant autour d'un axe de rotation et comportant au moins deux rainures sensiblement perpendiculaires, dans lesquelles sont destinés à être insérés et guidés des ergots de l'organe menant et de l'organe mené, chaque rainure comportant deux faces de guidage opposées, dont une première face est équipée d'au moins un rouleau d'axe parallèle à l'axe de rotation de l'élément intermédiaire et destiné à limiter le frottement de l'ergot correspondant, caractérisé en ce qu'au moins un flasque élastique est fixé sur l'élément intermédiaire, pour le maintien élastique des rouleaux dans les rainures en direction axiale.

Le flasque élastique permet de maintenir axialement les rouleaux de façon simple et efficace.

Le flasque a pour rôle d'orienter les rouleaux parallèlement par rapport aux axes de rotation. Le flasque a également pour rôle de maintenir ces mêmes rouleaux en place quand ils ne transmettent pas de couple. Ainsi, le flasque diminue le risque de bruyance susceptible d'être produit par ces mêmes rouleaux. Le flasque permet enfin de maintenir les rouleaux en place pendant les opérations d'assemblage.

L'élasticité du flasque permet notamment de maintenir en place les rouleaux lorsqu'ils ne transmettent pas de couple afin d'éviter des bruits indésirables.

Dans un exemple, deux flaques sont fixés, les flasques étant fixés de part et d'autre de l'élément intermédiaire. Au moins l'un des flasques possède un effet élastique, de sorte que chaque rouleau est pincé axialement entre les flasques, de manière indépendante.

Les rouleaux sont disposés de telle manière qu'ils transmettent le couple issu de l'effort de rappel de l'embrayage tout en roulant.

Les rouleaux sont également disposés de telle manière qu'ils transmettent le couple dans le sens de rappel de l'effort d'embrayage et pas dans l'autre sens. Dans le sens inverse, le couple est transmis par contact direct entre l'élément intermédiaire et les ergots de des organes d'entrée et de sortie.

En outre, l'utilisation de rouleaux d'un seul côté des rainures, ce côté étant celui en contact avec les ergots des organes menés et menant lors de l'ouverture ou la fermeture d'un embrayage commandé par le dispositif selon l'invention, permet de réduire les coûts.

Selon une autre caractéristique de l'invention, l'élément intermédiaire est globalement de forme annulaire cylindrique, les rainures débouchant sur la périphérie radialement externe de l'élément intermédiaire, chaque rainure comportant un bec de retenue du rouleau correspondant, à l'extrémité radialement externe de sa première face de guidage.

Les becs de retenue permettent d'éviter que les rouleaux s'échappent en périphérie externe de l'élément intermédiaire, sous l'effet de la force centrifuge.

En variante, le flasque est formé avec des plots insérés dans des trous axiaux des rouleaux pour le maintien des rouleaux en direction radiale.

De préférence, l'élément intermédiaire comporte deux paires de rainures sensiblement perpendiculaires, l'organe menant et l'organe mené comportant chacun deux ergots guidés dans lesdites rainures.

L'élément intermédiaire peut ainsi présenter une structure symétrique, limitant les vibrations en fonctionnement.

Avantageusement, deux flasques sont fixés sur l'élément intermédiaire, de part et d'autre de celui-ci pour le maintien des rouleaux.

Les deux flasques peuvent être identiques.

Selon une variante de réalisation de l'invention, l'élément intermédiaire est formé d'une pièce avec des moyens de maintien des rouleaux sur une de ses faces radiales, le flasque précité étant fixé sur une autre face radiale.

En outre, les rouleaux peuvent être cylindriques ou présenter une forme en tonneau.

L'invention concerne également un dispositif de commande d'un embrayage, en particulier pour véhicule automobile, comprenant un moteur électrique comportant un arbre de sortie rotatif couplé à un organe mobile de l'embrayage par l'intermédiaire de moyens de couplage, caractérisé en ce que les moyens de couplage comportent un dispositif de transmission de couple du type précité.

L'invention concerne de plus un embrayage de type normalement ouvert comportant un dispositif de commande du type précité.

Dans l'invention, on cherche à diminuer le coût et le nombre de pièces.

Dans l'invention, on cherche également à avoir un rendement élevé dans un sens et médiocre dans l'autre sens.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en perspective d'une partie d'un double embrayage selon l'invention,
- la figure 2 est une vue en perspective d'une partie d'un actionneur d'embrayage équipé d'un dispositif de transmission de couple selon l'invention ;
- la figure 3 est une vue de face d'une première forme de réalisation d'un élément intermédiaire du dispositif de transmission de couple selon l'invention ;
- la figure 4 est une vue en coupe, selon la ligne IV-IV, de l'élément intermédiaire de la figure 3,
- les figures 5 et 6 sont des vues en perspective de l'élément intermédiaire des figures 3 et 4, respectivement avec un seul et avec les deux flasques élastiques,
- la figure 7 est une vue en coupe, selon la ligne VII-VII de la figure 9, d'une seconde forme de réalisation d'un élément intermédiaire ;
- la figure 8 est une vue en perspective de l'élément intermédiaire de la figure 7 ;
- la figure 9 est une vue de côté de l'élément intermédiaire de la figure 7 ;
- les figures 10 et 11 sont des vues en coupe de l'élément intermédiaire, respectivement selon les lignes X-X et XI-XI de la figure 7.

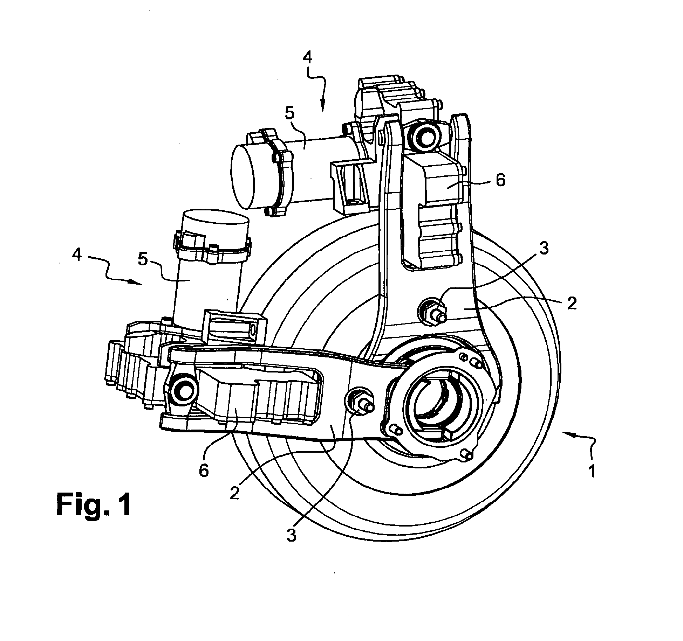

La figure 1 représente une partie d'un double embrayage 1 selon l'invention pour véhicule automobile, comportant, de manière connue en soi, deux fourchettes de commande 2 mobiles autour de pivots 3, actionnées chacune par un actionneur d'embrayage 4 comportant un moteur électrique 5, un réducteur de vitesse et des moyens de transformation de mouvement 6.

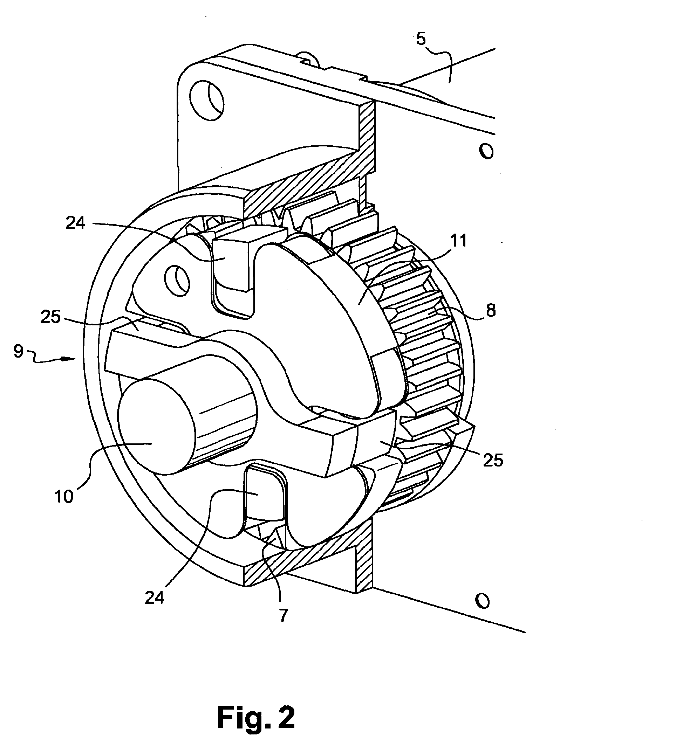

Comme cela est visible à la figure 2, un réducteur de vitesse est couplé à l'arbre de sortie du moteur électrique 5. Ce réducteur de vitesse, similaire à celui décrit dans le document FR 2 926 866, comporte un train épicycloïdal formé par une couronne 7, un satellite 8 et un porte satellite (non visible). De la même manière également que dans ce document, un dispositif de transmission de couple 9 du type joint de Oldham est monté en sortie du réducteur de vitesse.

Ce joint de Oldham 9 comporte un organe menant, formé dans ce cas par le satellite 8, destiné à entraîner en rotation un organe mené 10 au moyen d'un élément intermédiaire 11. L'axe de rotation du satellite 8, c'est-à-dire de l'organe menant, et l'axe de rotation de l'organe mené 10 sont décalés et parallèles. Plus précisément, l'axe de rotation du satellite 8 se déplace autour de l'axe fixe de l'organe mené 10, lors du fonctionnement du moteur électrique 5.

L'organe mené 10 est un arbre destiné à entraîner les moyens de transformation de mouvement 6 et, ainsi, les fourchettes d'actionnement 2 des embrayages.

On s'intéressera plus particulièrement dans ce qui suit à la structure de l'élément intermédiaire 11.

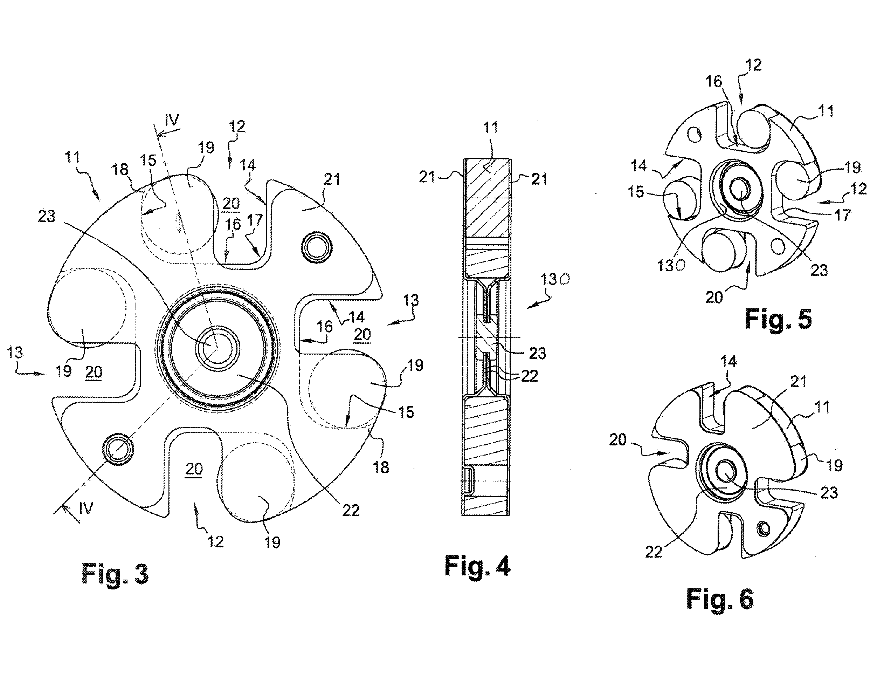

Les figures 3 à 6 montrent une première forme de réalisation de l'invention, dans laquelle l'élément intermédiaire 11 est globalement de forme annulaire cylindrique et comporte quatre rainures ou lumières radiales 12 et 13, débouchant sur la périphérie radialement externe de l'élément intermédiaire 11. Ce dernier comporte également un trou central 130.

Les lumières sont agencées en deux paires, respectivement 12 et 13, orientées perpendiculairement l'une par rapport à l'autre.

Chaque lumière comporte deux faces de guidage opposées 14 et 15 et une face de fond 16, raccordées les unes aux autres par des zones arrondies 17.

L'une 15 des faces de guidage est pourvue d'un bec de retenue 18 (figure 3) faisant saillie en direction de l'autre face de guidage 14 et disposé à l'extrémité radialement externe de ladite face 15.

Un rouleau 19 est inséré dans chaque lumière 12, 13 de façon à ce qu'il soit en contact avec ladite face 15 et soit retenu radialement par le bec 18 correspondant. Un espace 20 est ménagé entre le rouleau 19 et la face de guidage opposée 14, destiné à l'insertion et au guidage d'un ergot de l'organe menant ou de l'organe mené. Les rouleaux 19 sont cylindriques ou présentent une forme en tonneau. Les rouleaux 19 peuvent être creux.

Deux flasques élastiques 21 en tôle sont fixés sur l'élément intermédiaire 11, de part et d'autre de celui-ci. Les flasques élastiques 21 présentent une forme circulaire et comportent des découpes situées en regard des espaces 20 ménagés entre le rouleau 19 et la face de guidage opposée 14. Les extrémités des rouleaux 19 prennent appui contre les deux flasques 21, qui les maintiennent élastiquement en position axiale.

Comme indiqué précédemment, les rouleaux 19 sont également maintenus radialement dans les lumières 12, 13 par les becs de retenue 18.

D'autres moyens peuvent être utilisés pour retenir radialement les rouleaux 19. Par exemple, il peut être réalisé des picots élastiques (non représentés) sur le(s) flasque(s) et/ou sur les ergots d'entrée et de sortie de manière à empêcher le débattement radial des rouleaux en prenant appui dans le creux de ces derniers.

Les flasques peuvent être fixés sur le croisillon par soudage, sertissage, cloutage, pinçage au moyen d'une liaison entre les deux flasques par soudage, sertissage, rivetage,.....

Les flasques 21 présentent également des zones centrales cambrées 22, logées dans le trou central 130 de l'élément intermédiaire 11. Les flasques 21 sont fixés l'un à l'autre, au niveau des zones cambrées 22, par un rivet central 23.

Comme cela est visible à la figure 2, deux ergots 24 de l'organe menant 8 sont insérés et guidés dans les lumières 12, diamétralement opposées, d'une première paire, et deux ergots 25 de l'organe mené 10 sont insérés et guidés dans les lumières 13, diamétralement opposées, de la seconde paire.

En fonctionnement normal, c'est-à-dire lors d'un embrayage ou d'un débrayage, les ergots 24 et 25 se déplacent dans les espaces 20 précités, en venant en contact contre les rouleaux 19 , ce qui améliore le rendement du dispositif de transmission de couple 19. En cas de coupure électrique, sous l'effet du couple de rappel de l'embrayage, les ergots 24 et 25 se déplacent également dans les espace 20 précités, en roulant sur les galets 19, ce qui améliore le rendement du dispositif de transmission de couple 9 et donc la vitesse d'ouverture de l'embrayage.

Un dispositif de transmission de couple de ce type dans une commande d'embrayage est habituellement associé à un actionneur d'embrayage électromécanique dans un système de pilotage d'embrayage commandé par un calculateur. Ce système nécessite une initialisation qui comporte entre autre un apprentissage de la butée débrayée de l'actionneur. Lors de cet apprentissage, le sens du couple entre organe menant 8 et mené 10 est inversé par rapport au sens de fonctionnement normal et les ergots 24 et 26 se déplacent en frottant contre les surfaces 14 des lumières ce qui dégrade le rendement du dispositif de transmission de couple 9. Cette dégradation a un effet positif car elle minimise les efforts dans la chaîne cinématique comprise entre l'organe mené 10 et la butée située dans le carter de l'actionneur.

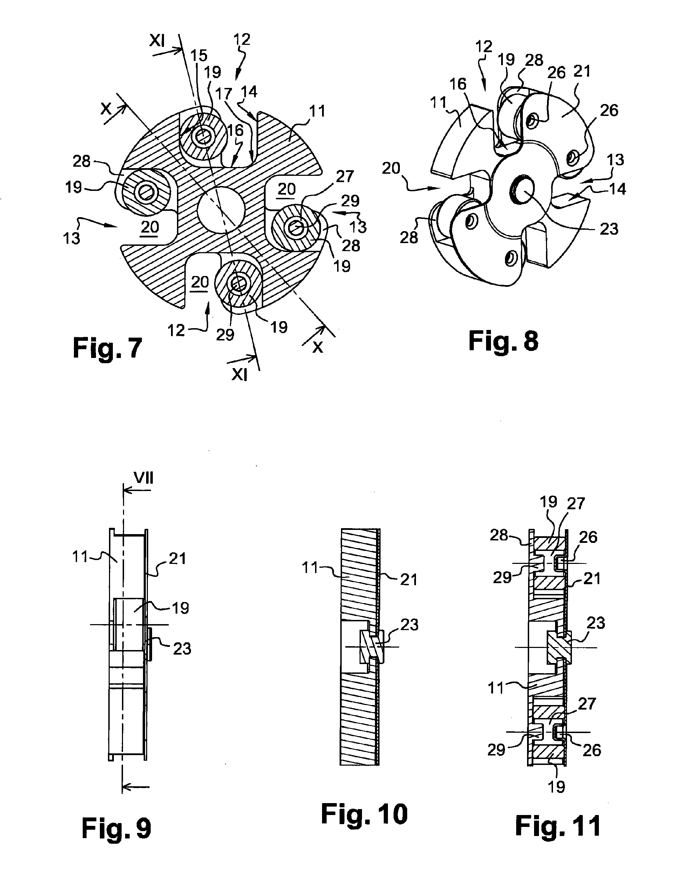

Les figures 7 à 11 illustrent une seconde forme de réalisation dans laquelle les faces 15 des lumières 12, 13 ne comportent pas de bec de retenue. Le maintien des rouleaux 19 est toutefois assuré à l'aide de plots 26 (figure 8) formés sur les flasques et insérés dans des trous axiaux 27 des rouleaux 19, avec un jeu suffisant pour permettre aux rouleaux 19 de se déplacer contre la paroi 15.

Dans cette variante également, l'élément intermédiaire 11 n'est équipé que d'un flasque 21, l'élément intermédiaire 11 comprenant des parois de maintien 28 formées intégralement avec l'élément intermédiaire 11 et s'étendant radialement en regard des rouleaux 19, et du flasque 21, de façon à assurer la même fonction de retenue axiale des rouleaux 19 que dans la réalisation précédente. Ces parois 28 comportent également des plots 29 insérés dans les trous axiaux 27 des rouleaux 19.

L'invention propose ainsi un dispositif de transmission de couple facile à monter, peu coûteux, capable de faciliter le retour en position ouverte ou débrayée de l'embrayage correspondant et améliorant le rendement global de l'actionneur.

## Revendications

1. Dispositif de transmission de couple (9), entre un organe menant (8) et un organe mené (10) comprenant un élément intermédiaire (11) destiné à être entraîné en rotation par l'organe menant (8) autour d'un axe de rotation et comportant au moins deux rainures (12, 13) sensiblement perpendiculaires, dans lesquelles sont destinés à être insérés et guidés des ergots (24, 25) de l'organe menant (8) et de l'organe mené (10), chaque rainure (12, 13) comportant deux faces de guidage opposées (14, 15), dont une première face (15) est équipée d'au moins un rouleau (19) d'axe parallèle à l'axe de rotation de l'élément intermédiaire (11) et destiné à limiter le frottement de l'ergot correspondant (24, 25), **caractérisé en ce qu'**au moins un flasque élastique (21) est fixé sur l'élément intermédiaire (11), pour le maintien élastique des rouleaux (19) dans les rainures (12, 13) en direction axiale.

2. Dispositif (9) selon la revendication 1, **caractérisé en ce que** l'élément intermédiaire (11) est globalement de forme annulaire cylindrique, les rainures (12, 13) débouchant sur la périphérie radialement externe de l'élément intermédiaire (11), chaque rainure (12, 13) comportant un bec de retenue (18) du rouleau correspondant (19), à l'extrémité radialement externe de sa première face de guidage (15).

3. Dispositif (9) selon la revendication 1 ou 2, **caractérisé en ce que** le flasque (21) est formé avec des plots (26) insérés dans des trous axiaux (27) des rouleaux (19) pour le maintien des rouleaux (19) en direction radiale.

4. Dispositif (9) selon l'une des revendications 1 à 3, **caractérisé en ce que** l'élément intermédiaire (11) comporte deux paires de rainures (12, 13) sensiblement perpendiculaires, l'organe menant (8) et l'organe mené (10) comportant chacun deux ergots (24, 25) destinés à être guidés dans lesdites rainures (12, 13).

5. Dispositif (9) selon l'une des revendications 1 à 4, **caractérisé en ce que** deux flasques (21) sont fixés sur l'élément intermédiaire (11), de part et d'autre de celui-ci pour le maintien des rouleaux (9).

6. Dispositif (9) selon la revendication 5, **caractérisé en ce que** les deux flasques (21) sont identiques.

7. Dispositif (9) selon l'une des revendications 1 à 4, **caractérisé en ce que** l'élément intermédiaire (11) est formé d'une pièce avec des moyens de maintien (28) des rouleaux (19) sur une de ses faces radiales, le flasque précité (21) étant fixé sur sa face axiale.

8. Dispositif (9) selon l'une des revendications 1 à 7, **caractérisé en ce que** les rouleaux (19) sont cylindriques ou présentent une forme en tonneau.

9. Dispositif de commande d'un embrayage (1), en particulier pour véhicule automobile, comprenant un moteur électrique (5) comportant un arbre de sortie rotatif couplé à un organe mobile de l'embrayage par l'intermédiaire de moyens de couplage (6, 9), **caractérisé en ce que** les moyens de couplage comportent un dispositif de transmission de couple (9) selon l'une des revendications 1 à 8.

10. Embrayage, **caractérisé en ce qu'**il comporte un dispositif de commande selon la revendication 9.

## Patentansprüche

1. Vorrichtung zur Drehmomentübertragung (9) zwischen einem Antriebsorgan (8) und einem angetriebenen Organ (10), die ein Zwischenelement (11) enthält, das dazu bestimmt ist, vom Antriebsorgan (8) um eine Drehachse in Drehung versetzt zu werden, und mindestens zwei im Wesentlichen lotrechte Rillen (12, 13) aufweist, in die Führungszapfen (24, 25) des Antriebsorgans (8) und des angetriebenen Organs (10) eingeführt und in ihnen geführt werden sollen, wobei jede Rille (12, 13) zwei gegenüberliegende Führungsseiten (14, 15) aufweist, von denen eine erste Seite (15) mit mindestens einer Rolle (19) ausgestattet ist, deren Achse parallel zur Drehachse des Zwischenelements (11) liegt und die dazu bestimmt ist, die Reibung des entsprechenden Führungszapfens (24, 25) zu begrenzen, **dadurch gekennzeichnet, dass** mindestens ein elastischer Flansch (21) am Zwischenelement (11) zum elastischen Halt der Rollen (19) in den Rillen (12, 13) in axialer Richtung befestigt ist.

2. Vorrichtung (9) nach Anspruch 1, **dadurch gekennzeichnet, dass** das Zwischenelement (11) global eine zylindrische Ringform hat, wobei die Rillen (12, 13) am radial äußeren Umfang des Zwischenelements (11) münden, wobei jede Rille (12, 13) eine Haltenase (18) für die entsprechende Rolle (19) am radial äußeren Ende ihrer ersten Führungsseite (15) aufweist.

3. Vorrichtung (9) nach Anspruch 1 oder 2, **dadurch gekennzeichnet, dass** der Flansch (21) mit in axiale Löcher (27) der Rollen (19) zum Halt der Rollen (19) in radialer Richtung eingeführten Blöcken (26) geformt ist.

4. Vorrichtung (9) nach einem der Ansprüche 1 bis 3, **dadurch gekennzeichnet, dass** das Zwischenelement (11) zwei im Wesentlichen lotrechte Rillenpaare (12, 13) aufweist, wobei das Antriebsorgan (8) und das angetriebene Organ (10) je zwei Führungszapfen (24, 25) aufweisen, die dazu bestimmt sind, in den Rillen (12, 13) geführt zu werden.

5. Vorrichtung (9) nach einem der Ansprüche 1 bis 4, **dadurch gekennzeichnet, dass** zwei Flansche (21) auf dem Zwischenelement (11) zu dessen beiden Seiten zum Halt der Rollen (9) befestigt sind.

6. Vorrichtung (9) nach Anspruch 5, **dadurch gekennzeichnet, dass** die zwei Flansche (21) gleich sind.

7. Vorrichtung (9) nach einem der Ansprüche 1 bis 4, **dadurch gekennzeichnet, dass** das Zwischenelement (11) aus einem Stück mit Halteeinrichtungen (28) der Rollen (19) auf einer seiner radialen Seiten geformt wird, wobei der Flansch (21) auf seiner axialen Seite befestigt ist.

8. Vorrichtung (9) nach einem der Ansprüche 1 bis 7, **dadurch gekennzeichnet, dass** die Rollen (19) zylindrisch sind oder eine Tonnenform haben.

9. Vorrichtung zur Steuerung einer Kupplung (1), insbesondere für ein Kraftfahrzeug, die einen Elektromotor (5) enthält, der eine drehende Abtriebswelle aufweist, die über Kopplungseinrichtungen (6, 9) mit einem beweglichen Organ der Kupplung gekoppelt ist, **dadurch gekennzeichnet, dass** die Kopplungseinrichtungen eine Vorrichtung zur Drehmomentübertragung (9) nach einem der Ansprüche 1 bis 8 aufweisen.

10. Kupplung, **dadurch gekennzeichnet, dass** sie eine Steuervorrichtung nach Anspruch 9 aufweist.

## Claims

1. Device (9) for transmitting torque between a driving member (8) and a driven member (10) comprising an intermediate element (11) intended to be rotated by the driving member (8) about an axis of rotation and having at least two substantially perpendicular grooves (12, 13) in which lugs (24, 25) of the driving member (8) and of the driven member (10) are intended to be inserted and guided, each groove (12, 13) having two opposite guide faces (14, 15) of which a first face (15) is equipped with at least one roller (19) whose axis is parallel to the axis of rotation of the intermediate element (11) and which is intended to limit the friction of the corresponding lug (24, 25), **characterized in that** at least one elastic flange (21) is fixed to the intermediate element (11) in order to elastically hold the rollers (19) in the grooves (12, 13) in the axial direction.

2. Device (9) according to Claim 1, **characterized in that** the intermediate element (11) is generally of cylindrical annular shape, the grooves (12, 13) opening onto the radially external periphery of the intermediate element (11), each groove (12, 13) having a nose (18) for retaining the corresponding roller (19) at the radially external end of its first guide face (15).

3. Device (9) according to Claim 1 or 2, **characterized in that** the flange (21) is formed with studs (26) inserted into axial holes (27) in the rollers (19) in order to hold the rollers (19) in the radial direction.

4. Device (9) according to one of Claims 1 to 3, **characterized in that** the intermediate element (11) has two pairs of substantially perpendicular grooves (12, 13), the driving member (8) and the driven member (10) each having two lugs (24, 25) intended to be guided in the said grooves (12, 13).

5. Device (9) according to one of Claims 1 to 4, **characterized in that** two flanges (21) are fixed to the intermediate element (11), one on either side thereof, in order to hold the rollers (9).

6. Device (9) according to Claim 5, **characterized in that** the two flanges (21) are identical.

7. Device (9) according to one of Claims 1 to 4, **characterized in that** the intermediate element (11) is formed in one piece with means (28) for holding the rollers (19) on one of its radial faces, the aforementioned flange (21) being fixed to its axial face.

8. Device (9) according to one of Claims 1 to 7, **characterized in that** the rollers (19) are cylindrical or have a barrel shape.

9. Device for controlling a clutch (1), in particular for a motor vehicle, comprising an electric motor (5) having a rotary output shaft coupled to a moveable member of the clutch via coupling means (6, 9), **characterized in that** the coupling means have a torque transmission device (9) according to one of Claims 1 to 8.

10. Clutch, **characterized in that** it has a control device according to Claim 9.
